# EUROPEAN PATENT APPLICATION

(11) **EP 4 550 892 A1**
(43) Date of publication of application: **07.05.2025**
(21) Application number: 23831789.5
(22) Date of filing: 20.06.2023
(51) Int. Cl.: H04W 48/16, H04W 60/00, H04W 48/18, H04L 41/147, H04W 8/24

(54) **COMMUNICATION RELATED TO PLMN SEARCH INTERVAL**

(30) Priority: 28.06.2022 US 202263356044 P
(71) Applicant: LG Electronics Inc., Yeongdeungpo-gu Seoul 07336 (KR)
(72) Inventor: KIM, Hyunsook, Seoul 06772 (KR); KIM, Sunhee, Seoul 06772 (KR); CHOE, Hyunjung, Seoul 06772 (KR)
(74) Representative: Mooser, Sebastian Thomas
(86) International application number: PCT/KR2023/008499
(87) International publication number: WO 2024/005429

(57) **Abstract**

One disclosure of the present disclosure provides a method by which an AMF performs communication. The method may comprise the steps of: receiving a registration request message from a UE; transmitting a registration accept message to the UE; transmitting an analytics service subscription request message to an analytics function node; receiving analytics information from the analytics function node; and determining a PLMN search interval time of the UE on the basis of the analytics information.

## Description

### TECHNICAL FIELD

The present specification relates to a radio communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

User Equipment (UE) may roam to a visited public land mobile network (VPLMN). The home PLMN (HPLMN) may have discontinuous coverage. There is no discussion on how a roamed UE may search the HPLMN with discontinuous coverage.

### DISCLOSURE

### TECHNICAL SOLUTION

In one aspect, a method, performed by an AMF, for performing communication is provided. The method may include: receiving a registration request message from a UE; transmitting a registration accept message to the UE; transmitting an analytics service subscription request message to an analytics functional node; receiving analytics information from the analytics functional node; and determining a Public Land Mobile Network (PLMN) search interval time for the UE based on the analytics information.

In another aspect, an apparatus implementing the method is provided.

In one aspect, a method for a UE to perform communication is provided. The method may include: transmitting a registration request message to an AMF; receiving a registration acceptance message from the AMF; and receiving an updated PLMN search interval time from the AMF.

In another aspect, an apparatus implementing the method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a registration procedure to which implementations of the present disclosure is applied.
FIG. 7 shows an example of Scenario 1, a situation based on discontinuous coverage.
FIG. 8 shows an example of Scenario 2, a situation based on discontinuous coverage.
FIG. 9 shows an example of model training in OAM and model inference in NG-RAN.
FIG. 10 illustrates an example of model training and model inference in NG-RAN.
FIG. 11 illustrates a first example of a procedure according to one embodiment of the present disclosure.
FIG. 12 illustrates a second example of a procedure according to one embodiment of the present disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

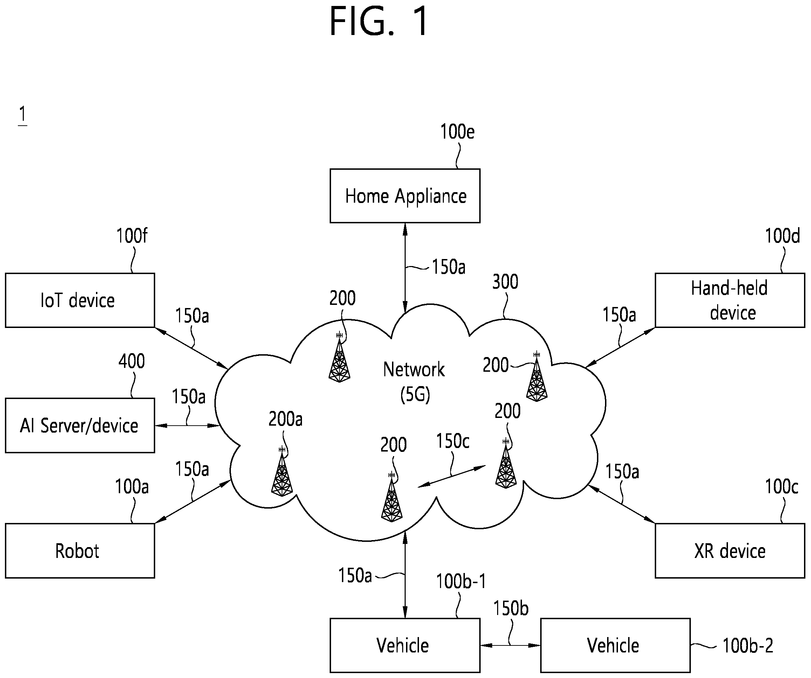

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without transmiting through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate Personal Area Networks (PANs) associated with small/low-power digital communication based on various specifications such as IEEE 802.15.4 and may be called various names.

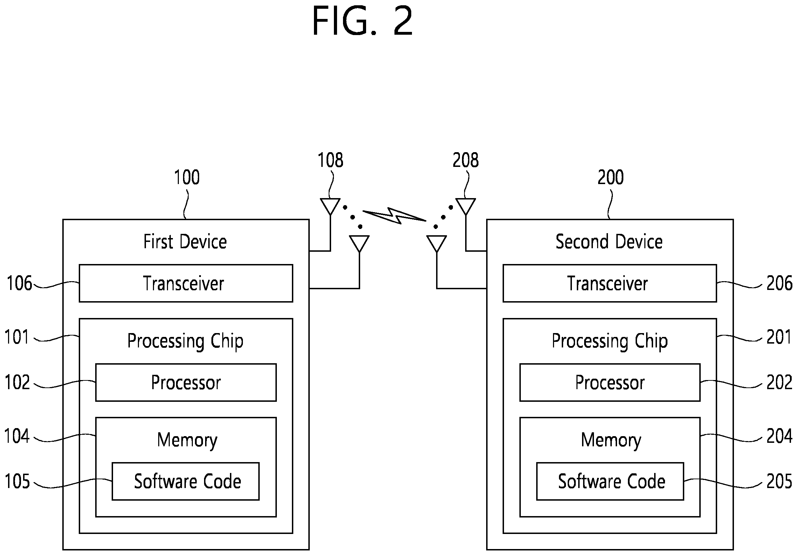

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE operation according to an implementation of the present disclosure or control the transceiver(s) 106 to perform the UE operation according to an implementation of the present disclosure. The processor(s) 202 connected to, mounted on or launched in the second wireless device 200 may be adapted to perform the BS operation according to an implementation of the present disclosure or control the transceiver(s) 206 to perform the BS operation according to an implementation of the present disclosure.

In the present disclosure, a BS is also referred to as a node B (NB), an eNode B (eNB), or a gNB.

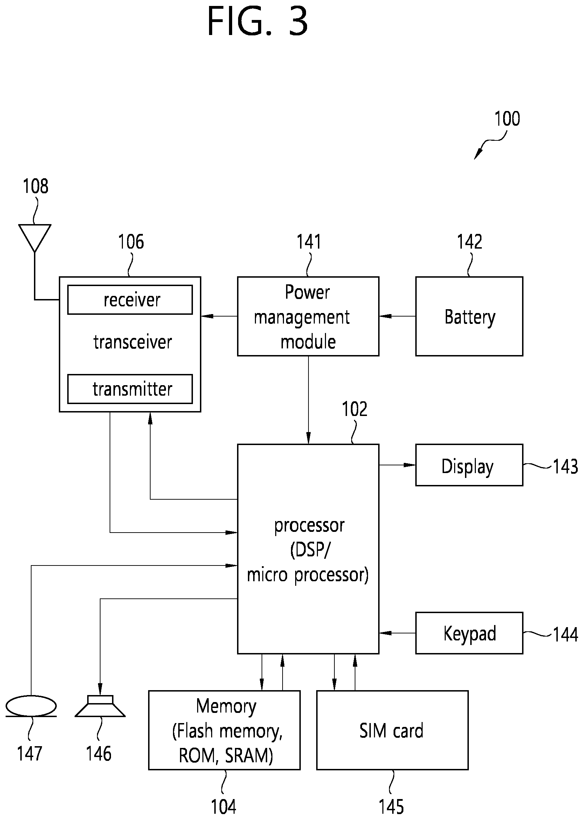

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

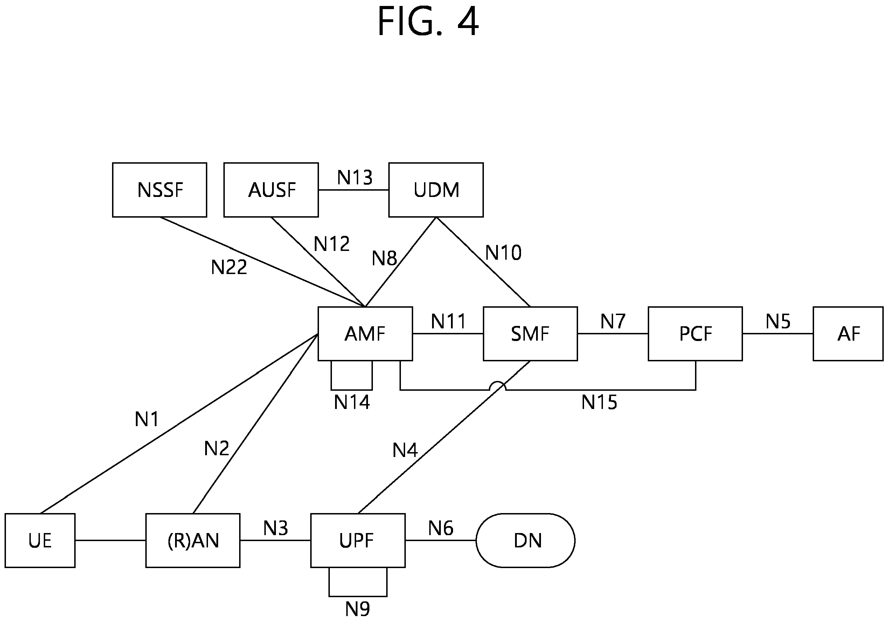

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)
   Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Section 4.2.2.2 of 3GPP TS 23.502 V16.3.0 (2019-12) can be referred.

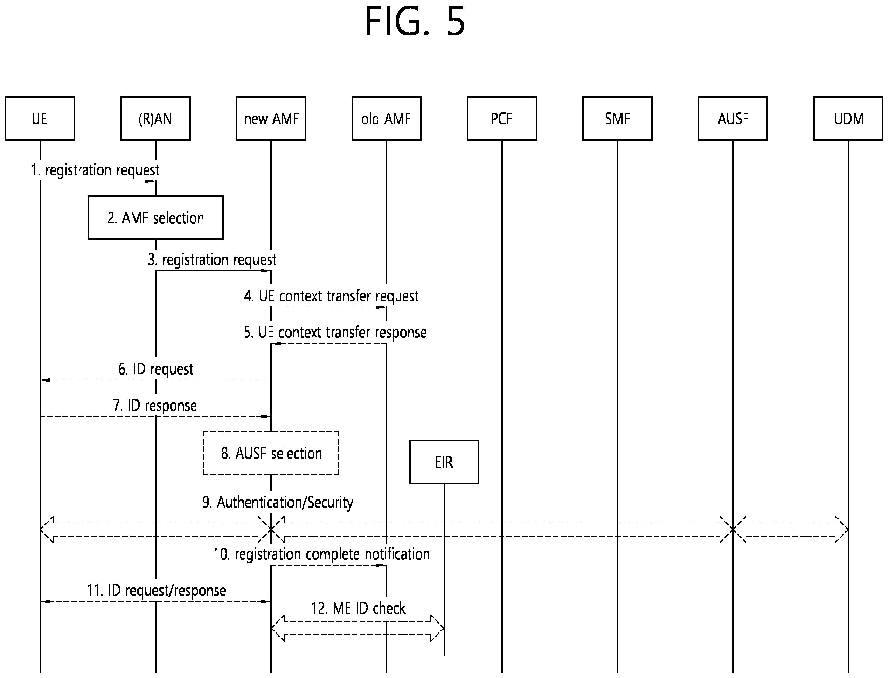

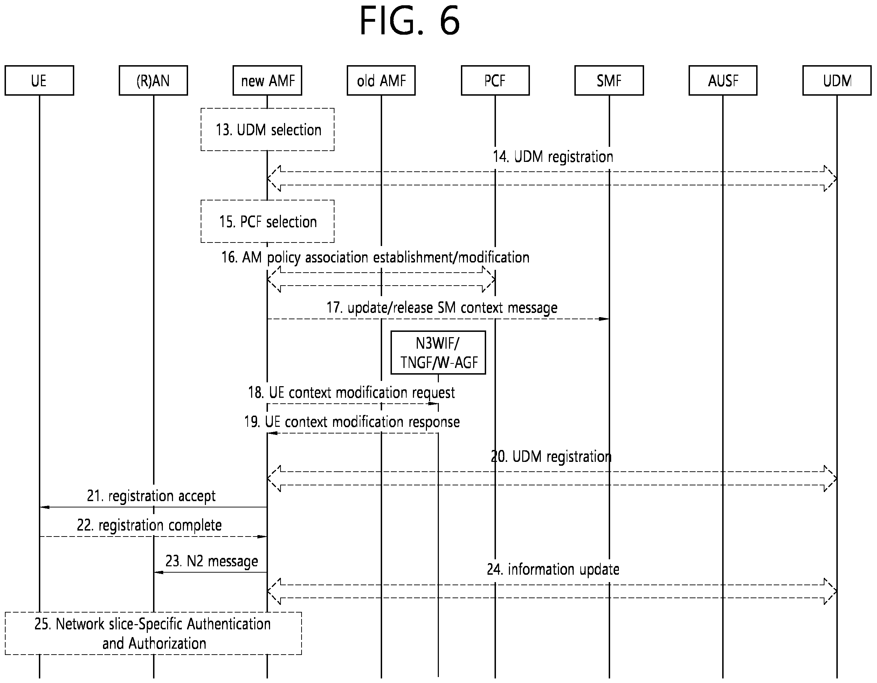

FIGS. 5 and 6 show an example of a registration procedure to which implementations of the present disclosure is applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF transmitting the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF transmitting an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or

Nsmf_PDUSession_ReleaseSMContext) to the SMF.

(18) Step 18: If the new AMF and the old AMF are in the same PLMN, the new AMF may transmit a UE Context Modification Request to the N3IWF/TNGF/W-AGF.

(19) Step 19: The N3IWF/TNGF/W-AGF may transmit a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF transmits a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall transmit the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each Single Network Slice Selection Assistance Information (S-NSSAI) of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may transmit a Registration Complete message to the new AMF when it has successfully updated itself.

The UE may transmit a Registration Complete message to the new AMF to acknowledge if a new 5G-GUTI was assigned.

(23) Step 23: For registration over 3GPP Access, if the new AMF does not release the signaling connection, the new AMF may transmit the RRC Inactive Assistance Information to the NG-RAN. For registration over non-3GPP Access, if the UE is also in CM-CONNECTED state on 3GPP access, the new AMF may transmit the RRC Inactive Assistance Information to the NG-RAN.

(24) Step 24: The new AMF may perform information update towards the UDM.

(25) Step 25: The UE may execute Network Slice-Specific Authentication and Authorization procedure.

In the following, PLMN selection in discontinuous coverage situations is explained.

Describes discontinuous coverage PLMN search and its impact on PLMN selection.

In PLMNs using satellite access with discontinuous coverage, the duration of a satellite flyover for a specific location on the ground is typically up to two minutes. Typical coverage gaps between subsequent flyovers extend to several hours (e.g., between 9 and 14 hours). In this context, a flyover means that the satellite passes over a specific location on the Earth's surface. This means that UEs in PLMNs with discontinuous coverage are in coverage less than 1% of the time. Even if this number is much higher (e.g., 10%), it is still much less than in a typical terrestrial network deployment, where the network must provide coverage 95% of the time or more.

Observation 1: In PLMN with satellite access based on discontinuous coverage, UEs are in coverage in a much shorter time than in conventional networks.

The PLMN search procedure and PLMN selection procedure in the 3GPP specifications are designed based on the assumption that the coverage of a particular PLMN at a particular location does not change over time. For example, when the UE performs PLMN selection at power-up or when recovering from lack of coverage, the UE selects the PLMN with the highest priority based on a snapshot of the PLMNs available at the UE location at a given time. Similarly, the time interval for searching for higher priority PLMNs is designed based on the tradeoffs associated with the likelihood of the UE moving to a location where higher priority PLMNs are available. However, the underlying assumption is that all available PLMNs at a given location are always available (and vice versa: PLMNs that are not available at a given time are never available).

Observation 2: The PLMN search and PLMN selection procedures are designed based on the assumption that the PLMN coverage of a particular location will not change. This assumption is not valid for PLMNs with discontinuous coverage.

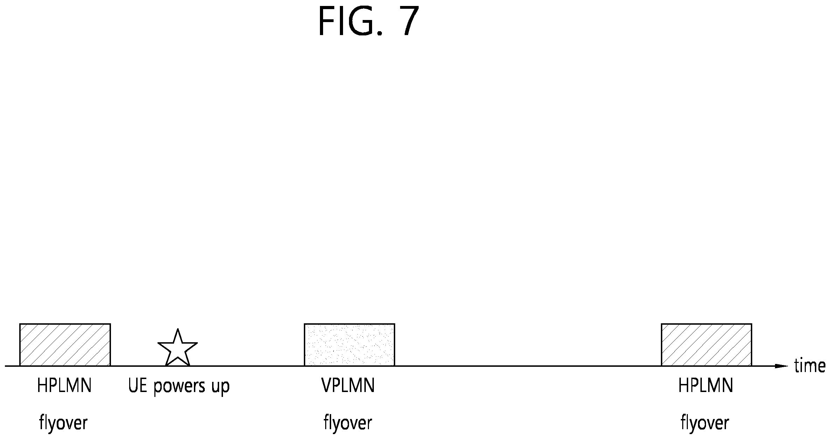

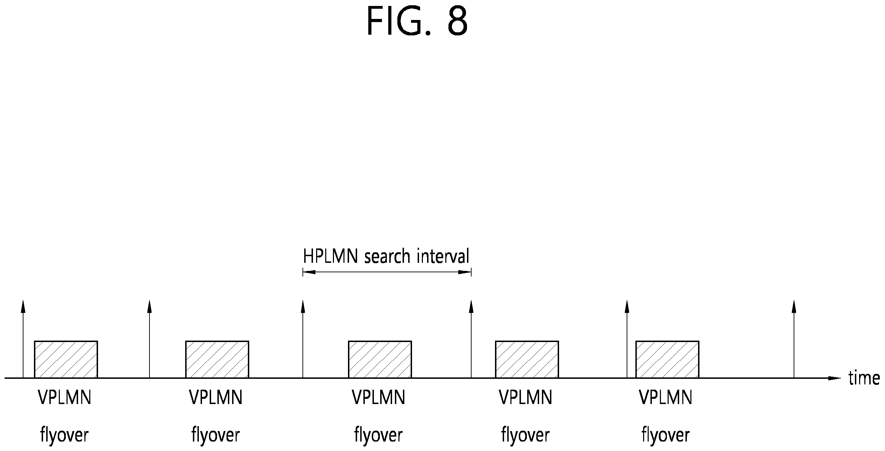

Based on Observation 1 and Observation 2, the traditional approach to PLMN search and PLMN selection is not adequate. The following scenarios involving HPLMNs are of particular interest. Scenario 1 is described below with reference to the example in FIG. 7, and Scenario 2 is described with reference to the example in FIG. 8.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 7** **shows an example of Scenario 1, a situation based on discontinuous coverage.**

In the example of Scenario 1 shown in FIG. 7, the HPLMN flyover, VPLMN flyover, and UE powers up are shown.

HPLMN flyover can refer to the time when an HPLNN using satellite access is available at the UE's location. VPLMN flyover may refer to the time when a VPLNN using satellite access is available in the UE's location.

According to the example in FIG. 7, the time the UE powers up may be after the HPLMN flyover. Then, for the powered up UE, the VPLMN flyover may appear first, before the next HPLMN flyover.

Scenario 1. A UE powers on while there is a coverage gap in the HPLMN. The flyover of the VPLMN may appear first. The UE may prefer to wait for the next flyover of the HPLMN rather than select the VPLMN and then select the HPLMN again later.

Observation 3: If the HPLMN uses discontinuous coverage, the UE may select the VPLMN even though the HPLMN is available.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

FIG. 8 shows an example of Scenario 2, a situation based on discontinuous coverage.

According to the example of Scenario 2 shown in FIG. 8, an HPLMN flyover, HPLMN, is shown.

In the example in Figure 8, the vertical arrow indicates that the UE performs the HPLMN search operation. HPLMN search interval means the time interval at which the UE performs the HPLMN search operation.

When the UE is in a VPLMN, the flyover of an HPLMN with discontinuous coverage may last less than the higher priority PLMN search interval. In this case, the UE cannot "catch" and cannot re-select the coverage of the HPLMN. To avoid this, the UE should adjust her priority search timer interval to "catch" the flyover of the HPLMN by adjusting her higher priority search timer interval.

Observation 4: If the HPLMN is using discontinuous coverage, the UE may not be able to reselect the HPLMN for a long time or at all.

To address the issues in Observation 1 through Observation 4, the following explanations may apply

If the PLMN search and PLMN selection procedures are used in PLMNs using discontinuous coverage, a PLMN, which is not optimal, might be selected. And, in the worst case, it is clear that the UE may not be able to select an HPLMN for a very long time.

How the UE adjusts its PLMN scanning/search based on discontinuous coverage deployments may be left to the UE implementation. This includes a mechanism to allow the UE to find HPLMNs with discontinuous coverage. However, in order to do this, the UE needs to know that the HPLMN is using discontinuous coverage. Otherwise, the UE does not know whether to use the conventional PLMN scan/search procedure or the procedure adapted for discontinuous coverage. Therefore, an indication to the USIM to allow the UE to know that the HPLMN uses discontinuous coverage may be added. This indication can be optional. When the UE detects this indication set on the USIM, the UE may adjust its PLMN search/scan procedure to achieve the following effects:
- Maximize the probability of selecting HPLMN when powering on or recovering from lack of coverage.
- Minimize the probability of "missing" a flyover from VPLMN to HPLMN.

It may be suggested that the USIM can indicate that the HPLMN is using discontinuous coverage.

A typical satellite E-UTRAN access in-coverage/out-of-coverage scenario might be, for example, when a UE is within the coverage of a satellite access cell for 10 minutes every 4 hours.

If the Registered PLMN (RPLMN) to which the UE is registered supports discontinuous coverage services, the UE satellite E-UTRAN access sublayer shall know when discontinuous coverage starts and when it stops for satellite E-UTRAN access.

As previously discussed, during periods of discontinuous coverage, the UE may disable the satellite E-UTRAN radio. And, when the satellite E-UTRAN access layer is disabled, the UE does not stop the timer T for periodic PLMN search, and the UE may postpone periodic PLMN search.

In the following, we describe periodic PLMN search during discontinuous coverage, periodic PLMN search when the RPLMN is the highest priority PLMN, and periodic PLMN search when the RPLMN is not the highest priority PLMN.

Periodic PLMN search during discontinuous coverage is explained.

The UE lower layer can learn the discontinuous coverage behavior of the RPLMN from the ephemeris data provided by the RPLMN. The lower layer can notify the UE NAS layer when the RPLMN's discontinuous coverage starts and stops.

The RPLMN might be a low priority PLMN. In this case, postponing periodic PLMN search during a gap in the RPLMN's coverage can have undesirable consequences with respect to the principle of maintaining the highest priority PLMNs whenever possible. That is, if periodic PLMN search is suspended so that periodic PLMN search is not performed during a gap in the RPLMN's coverage, the following problems may occur.

Here's an example of the problem:
1) While RPLMN satellite E-UTRAN is unavailable:
   - PLMN, which has a higher priority than terrestrial access or non-terrestrial access, can be used.
2) When the RPLMN becomes available again:
   - The UE may not be able to find a PLMN other than the RPLMN.

Therefore, the UE shall evaluate the priority of the RPLMN before deciding whether to postpone the periodic PLMN selection.

Observation 5: The UE should evaluate the priority of the RPLMN before deciding whether to defer the periodic PLMN search.

Periodic PLMN search when the RPLMN is the highest priority PLMN is described.

If the UE can determine that the RPLMN is the highest priority PLMN at the current UE location (e.g. if the VPLMN is the first PLMN in the "Operator/user controlled PLMN selector with access technology" list), the UE may safely defer periodic PLMN search during periods of discontinuous coverage.

Proposal #1: If the RPLMN is known to be the highest priority PLMN in the region, the UE may postpone its regular PLMN search.

Periodic PLMN search when the RPLMN is not the highest priority PLMN is descirbed.

If the UE may determine that the RPLMN is not the highest priority PLMN at the current UE location (e.g. if the VPLMN is the second PLMN in the "Operator/user controlled PLMN selector with access technology" list), the UE shall not postpone the periodic PLMN for the duration of the discontinuous coverage period.

This is because a satellite providing service over a higher priority PLMN may be available while the RPLMN is in discontinuous coverage, and if the periodic PLMN search is deferred, the UE may not find the higher priority PLMN.

The UE may disable the satellite E-UTRAN radio at the beginning of the discontinuous coverage and keep the Access Stratum (AS) disabled for the duration of the discontinuous coverage, but the radio must be enabled and perform periodic PLMN search.

Proposal #2: If the UE knows that the RPLMN is not the highest priority PLMN, the UE shall not postpone the periodic PLMN search during the period of discontinuous coverage.

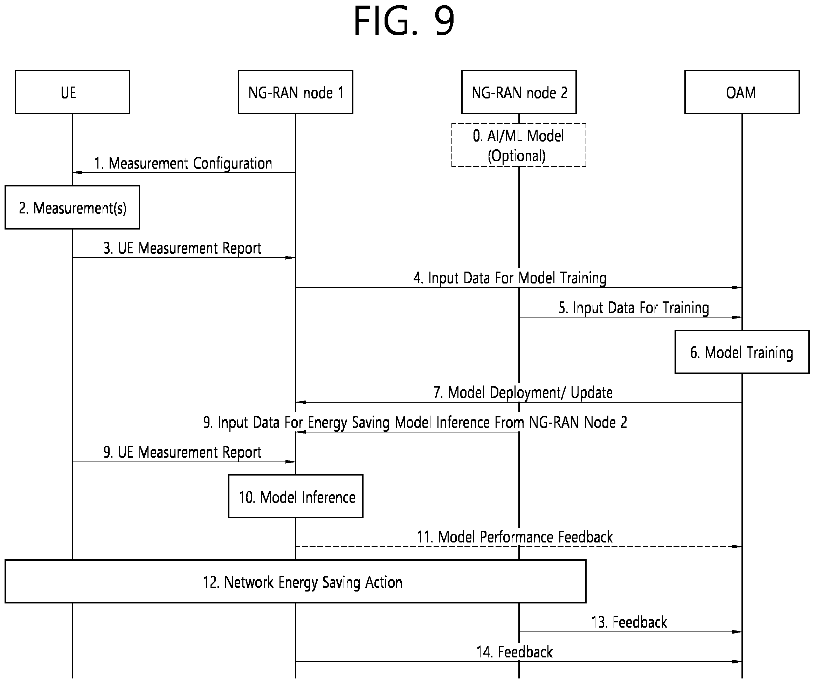

In the following, an example of AI/ML model training in OAM and AI/ML model inference in NG-RAN will be described, referring to FIG. 9.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 9** **shows an example of model training in OAM and model inference in NG-RAN.**

In the example in FIG. 9, the NG-RAN uses AI/ML models trained in OAM to make energy decisions. Here, an energy decision refers to a decision for optimal energy usage, such as reducing the use of UE's energy and/or network's energy.

Step 0: NG-RAN Node 2 can optionally be assumed to have an Artificial Intelligence/Machine Learning (AI/ML) model. If NG-RAN Node 2 has an AI/ML model, it can provide input information to NG-RAN Node 1.

Step 1: NG-RAN Node 1 can set the measurement information on the UE side. Then, the NG-RAN node 1 may transmit a setup message containing the measurement setup information to the UE, so that the UE may perform the measurement procedure and reporting.

Step 2: The UE may perform the measurement. For example, the UE may perform measurements indicated by the measurement settings information. For example, the UE may perform the indicated measurements (e.g., UE measurements related to RSRP, RSRQ, and SINR of the serving cell and neighboring cells). The UE may collect measurement values that are the result of the measurements.

Step 3: The UE may send a measurement reporting message to NG-RAN node 1.

Step 4: NG-RAN Node 1 may additionally transmit UE measurement reporting messages to the OAM along with other input data for model training.

Step 5: NG-RAN node 2 (optionally assumed to have an AI/ML model) also transmits input data for model training to the OAM.

Step 6: OAM may perform model training. It trains the AI/ML model by utilizing the required measurements and input data from other NG-RAN nodes to conserve network energy.

Step 7: The OAM distributes/updates the AI/ML model to the NG-RAN nodes. For example, the OAM may send information related to the AI/ML model to the NG-RAN nodes. The NG-RAN node may continue model training based on the AI/ML model received from the OAM.

Step 8: NG-RAN node 2 may send the necessary input data to NG-RAN node 1 for AI/ML-based network energy saving model inference.

Step 9: The UE may transmit a UE measurement report message to NG-RAN node 1.

Step 10: Based on the local input of NG-RAN node 1 and the input received from NG-RAN node 2, NG-RAN node 1 may generate model inference outputs (e.g., energy saving strategies, handover strategies, etc.).

Step 11: NG-RAN Node 1 may also send model performance feedback to the OAM.

Step 12: NG-RAN node 1 may execute actions related to network energy conservation based on the model inference results. For example, based on the model inference results, if a handover strategy is output, the NG-RAN node 1 may select the best target cell for each UE before performing the handover.

Step 13: NG-RAN Node 2 may provide feedback to the OAM.

Step 14: NG-RAN node 1 may provide feedback to the OAM.

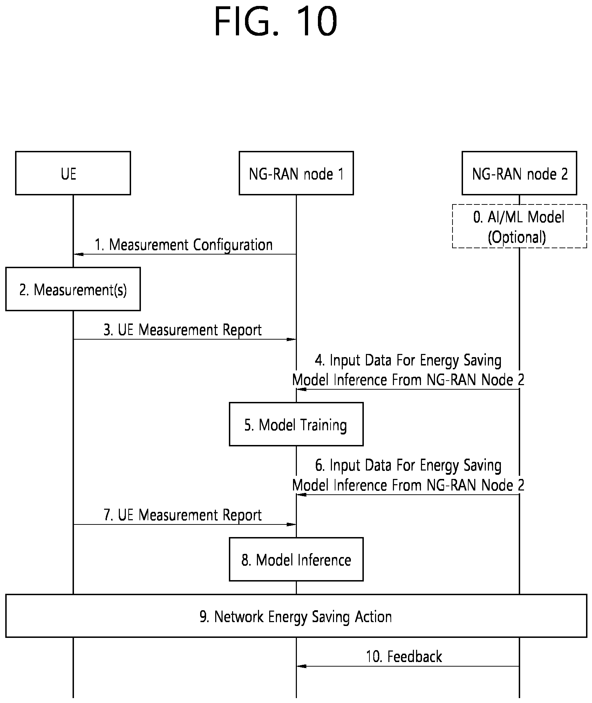

In the following, an example of AI/ML model training and AI/ML model inference in NG-RAN will be described, referring to FIG. 10.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

FIG. 10 illustrates an example of model training and model inference in NG-RAN.

In the example in FIG. 10, the NG-RAN is responsible for training the model and may make decisions related to energy conservation. Here, a decision related to energy conservation refers to a decision to reduce the use of energy of the UE and/or energy of the network.

Step 0: NG-RAN node 2 may optionally be assumed to have an AI/ML model. If NG-RAN node 2 has an AI/ML model, NG-RAN node 2 can provide input information to NG-RAN node 1.

Step 1: NG-RAN Node 1 may set the measurement information on the UE side. Then, the NG-RAN node 1 may send a setup message containing the measurement setup information to the UE, so that the UE may perform the measurement procedure and reporting.

Step 2: The UE collects the specified measurements (e.g., UE measurements related to RSRP, RSRQ, and SINR of the serving cell and neighboring cells).

Step 3: The UE may perform the measurement. For example, the UE may perform measurements indicated by the measurement settings information. For example, the UE may perform the indicated measurements (e.g., UE measurements related to RSRP, RSRQ, and SINR of the serving cell and neighboring cells). The UE may collect measurement values that are the result of the measurements.

Step 4: NG-RAN node 2 may send the necessary input data to NG-RAN node 1 for training the AI/ML-based network energy saving model.

Step 5: NG-RAN node 1 may train an AI/ML model for AI/ML-based energy saving based on the collected data. It can also be assumed that NG-RAN node 2 optionally has an AI/ML model for AI/ML-based energy saving. In this case, NG-RAN node 2 may generate predictive results/actions.

Step 6: NG-RAN node 2 may send the necessary input data to NG-RAN node 1 for model inference for AI/ML-based network energy saving.

Step 7: The UE may transmit a UE measurement reporting message to the NG-RAN node 1.

Step 8: Based on the local input of NG-RAN node 1 and the input received from NG-RAN node 2, NG-RAN node 1 can generate model inference outputs (e.g., energy saving strategies, handover strategies, etc.).

Step 9: NG-RAN node 1 may execute actions related to network energy conservation based on the model inference results. For example, based on the model inference results, if a handover strategy is output, the NG-RAN node 1 may select the best target cell for each UE before performing the handover.

Step 10: NG-RAN node 2 may provide feedback to NG-RAN node 1.

In the following, the present disclosure is described in more detail.

With the evolution of 5G networks and one of the ultimate targets of 6G networks, there is a growing interest in zero-touch configuration/operation. Recently, research has been conducted to utilize the information analysis/prediction capabilities of NWDAF to perform network automation in the 3GPP 5G core network. In addition, research is being conducted to utilize information analysis/prediction capabilities in base stations (e.g., NG-RAN).

In this context, zero-touch configuration/operation may refer to, for example, a set of technologies and processes that automate the setup and management of a network with little or no human intervention. The goal of zero-touch configuration/operation may be to reduce the time, effort, and cost associated with deploying and managing a network while improving the overall efficiency and performance of the network. Zero-touch configuration/operation may be achieved by using advanced automation technologies such as AI/ML, robotics, and software-defined networking (SDN).

On the other hand, in the prior art, the configuration by OAM is not clear how its value is determined. For example, the configuration by OAM is typically set statically by the operator. As a result, it is difficult to reflect the real-time system environment in OAM, and the effectiveness of OAM is limited. In other words, it is difficult to achieve zero-touch configuration/operation with OAM.

Traditionally, for devices subscribed to HPLMN in a discontinuous coverage environment, the PLMN search interval cannot be effectively determined. For reference, in various examples of the present disclosure, a terminal may refer to a UE.

If data statistics and prediction values may be used to determine the PLMN search interval of terminals subscribed to HPLMNs in a discontinuous coverage environment, the performance of the system may be maximized. For example, if data statistics and predictions are utilized to determine the PLMN search interval of these devices, more effective PLMN selection may be performed and power consumption of the devices may be reduced. Thus, the performance of the system may be maximized. However, prior art has not specifically discussed utilizing data statistics and prediction values to determine the PLMN search interval of a terminal.

In the prior art, the Connected-Discontinuous Reception (CDRX) value is determined by the base station configuration.

On the other hand, there is a discussion that XR/media traffic characteristics, traffic pattern and statistics could be considered as core network assistant information for effective CDRX management. However, in the past, specific measures to control CDRX management by considering the power consumption of devices in real time have not been discussed.

Note that in the present disclosure, a terminal may refer to, for example, a UE.

According to one embodiment of the present disclosure, a network node may perform functions and/or behaviors such as the following examples. In an example of the present disclosure, the network node may be a network control node (e.g., NWDAF), an analytics function node of an Access network, a network control node (e.g., OAM or AMF), etc.

A network control node (e.g., NWDAF) may perform the following functions and/or operations

The network control node (e.g., NWDAF) may obtain information related to discontinuous coverage from other network nodes. For example, the information related to discontinuous coverage may include, for example, hourly/regional HPLMN flyover information, information on whether the terminal supports/operates discontinuous coverage directly or indirectly via the terminal's AS deactivation time/region/retention period, subscription information, and/or the terminal's satellite access and/or discontinuous coverage support/operation capability. Other network nodes that provide information related to the discontinuous coverage of the terminal may obtain such information directly from the terminal or indirectly from base stations, OAM nodes, third network nodes, UDMs, AFs, etc.

The network control node (e.g. NWDAF) may analyze the statistical values/predicted values of HPLMN flyover information and PLMN search interval time experienced by the terminal.

A network control node (e.g., NWDAF) may perform these analytics to accomplish the following objectives:
- Maximize the probability of selecting HPLMN when the UE powers up or when the UE recovers from lack of coverage.
- Minimize the probability of "missing" a flyover from VPLMN to HPLMN.

The network control node (e.g., NWDAF) may send analyzed values (e.g., analysis results) to the OAM or another network control node (e.g., AMF).

The analytics function node in the Access network may perform the following functions and/or behaviors Note that the analytics function node in the Access network may also be colocated in or with the base station/NG-RAN or OAM node.

The analytics function node of the Access network may obtain information related to discontinuous coverage from other network nodes. For example, the information related to discontinuous coverage may include, for example, HPLMN flyover information by time/region, information on whether the device supports/operates discontinuous coverage directly or indirectly through the device's AS deactivation time/region/maintenance period, subscription information, and/or the device's satellite access and/or discontinuous coverage support/operation capability. Other network nodes that provide information related to the discontinuous coverage of the terminal may obtain such information directly from the terminal or indirectly from base stations, OAM nodes, third network nodes, UDMs, AFs, etc.

The analytics function node in the Access network may analyze statistical values/predicted values for the battery life of the device. In particular, the analytics function node of the Access network may analyze statistical/prediction values for battery life based on whether certain services are used or not.

Examples of statistical values/predicted values for the terminal's battery life are as follows. For example, the statistical value/predicted value for the terminal's battery life may be the terminal's power charge percentage. The statistical value/predicted value for the battery life of the terminal may include, for example, information such as how much power the terminal has used over a period of time, what pattern the terminal is using power in (e.g., which apps are being used periodically), how much power will be left after some time, and so on. The analytics function node of the Access network may analyze the statistical value/predicted value for HPLMN flyover information and PLMN search interval time experienced by the terminal.

Examples of statistical values/predicted values for HPLMN flyover information experienced by the terminal include the following. For example, the statistical value/predicted value for the HPLMN flyover information experienced by the terminal may include a statistical value of the HPLMN flyover time and time interval measured by the terminal. For example, the statistical value/predicted value for the HPLMN flyover information experienced by the terminal may include a value that predicts, based on the statistical value, at what interval and/or in what pattern of intervals the HPLMN appears. An example of a statistical value/predicted value for PLMN search interval time is as follows. For example, the analytics function node may further determine at what intervals and in what pattern the terminal is performing PLMN searches. And, based on the information related to performing PLMN searches, the analytics function node may include a prediction value for PLMN search interval time as a prediction value for what time and at what frequency the terminal will perform PLMN searches in the future.

The analytics function node in the Access network may perform such analytics to achieve the following objectives
- Maximize the probability of selecting HPLMN when the UE powers up or when the UE recovers from lack of coverage.
- Minimize the probability of "missing" a flyover from VPLMN to HPLMN.

The analytics function node in the Access network may transmit analyzed values (e.g., analysis results) to the OAM or another network control node (e.g., AMF).

A network control node (e.g., OAM or AMF) may perform the following functions and/or operations.

The network control node (e.g., OAM or AMF) may determine the MinimumPeriodicSearchTimer value based on the obtained statistical values and/or predicted values. For example, the network control node (e.g., the OAM or AMF) may determine the MinimumPeriodicSearchTimer value as shown in the following example. For example, the network control node (e.g., OAM or AMF) may determine the MinimumPeriodicSearchTimer value based on information related to discontinuous coverage. The information related to discontinuous coverage may include HPLMN flyover information by time/region, information related to whether the terminal supports/operates discontinuous coverage directly or indirectly via the terminal's AS deactivation time/region/maintenance period, subscription information, etc. and/or the terminal's satellite access and/or capability to support/operate discontinuous coverage. The information related to discontinuous coverage may be direct information collected from the terminal, or may be statistical/prediction values processed from other implied information. For example, in FIG. 8, the network control node (e.g., OAM or AMF) may know the VPLMN flyover value in advance. In this case, the network control node (e.g., OAM or AMF) may determine the terminal's MinimumPeriodicSearchTimer value based on the network/operator intent by adjusting the HPLMN search interval value, wherein the MinimumPeriodicSearchTimer value may be a parameter that specifies a minimum time interval for the UE to periodically search for new cells (e.g., 5G cells). The MinimumPeriodicSearchTimer value may, for example, represent a minimum value of the PLMN search interval. For example, the MinimumPeriodicSearchTimer value may be a minimum time for the terminal to periodically search for PLMNs, and the MinimumPeriodicSearchTimer value may be a value set on the terminal. For example, the terminal may set a timer based on this value and perform a PLMN search action when the timer value expires.

The network control node (e.g., OAM or AMF) may transmit the MinimumPeriodicSearchTimer value to the UE. For example, the network control node (e.g., OAM or AMF) may send the MinimumPeriodicSearchTimer value to the UE via another network node, such as an OAM node or utilizing a NAS. The network control node (e.g., OAM or AMF) may set the timer value to the UE by sending the timer value to the UE.

Note that a "network control node" as described in various examples of the present disclosure may also be referred to as a network node.

In the following, examples of the application of various embodiments of the present disclosure are described for automatic and manual network selection modes.

Automatic and manual network selection modes when not registered with the disaster roaming service are described.

A mobile station (MS) (e.g. UE) may be in a VPLMN without being registered for the disaster roaming service. In this case, the MS may attempt to obtain service from the HPLMN (if the EHPLMN list is not present or empty) or from one of the EHPLMNs (if the EHPLMN list is present) or from a higher priority PLMN/access technology combination listed in the "User controlled PLMN selector" or "Operator controlled PLMN selector", by periodically smayning according to the requirements (e.g. the requirements applicable to the automatic network selection mode). For this purpose, the SIM may store the value of timer T. The interpretation of the stored value may vary depending on the radio features supported by the MS.
- For MSs that do not support any of the following: If the MS does not support EC-GSM-IoT, Category M1, or Category NB1, the following may apply:
   a) If the MS is in a VPLMN with satellite NG-RAN access over a shared Mobile Country Code (MCC), based on a step of 6 multiplied by an integer M minutes, T is in the range between 6 multiplied by an integer M minutes and 8 multiplied by an integer M minutes. If no value for M is stored in the SIM, the default value for M is 1.
   b) T may be in the range of 6 minutes to 8 hours in 6 minute steps, or it may indicate that T should not be attempted periodically. If no value for T is stored in the SIM, 60 minutes is used as the default value for T.
- For an MS that supports only one or a combination of the following: For example, an MS may support one or a combination of EC-GSM-IoT, Category M1, or Category NB1. In this case, T may be in a range from 2 hours to 240 hours, using a 2-hour step from 2 hours to 80 hours and a 4-hour step from 84 hours to 240 hours. Alternatively, T may indicate that no periodic attempts should be made. If no value for T is stored in the SIM, 72 hours is used as the default value for T.
- For MS that supports both a) and b) below:
   a) One or a combination of the following: EC-GSM-IoT, Category M1, or Category NB1; and
   b) Any access technology other than: EC-GSM-IoT, Category M1, or Category NB1,

For MSs that support both a) and b), T is interpreted according to the access technology in use, as specified below:
1) At the start of timer T, the MS is using one of the following: For example, the MS may use EC-GSM-IoT, category M1 or category NB1. In this case, T may be in a range from 2 hours to 240 hours by using a 2-hour step from 2 hours to 80 hours and a 4-hour step from 84 hours to 240 hours. Alternatively, T may indicate that no periodic attempts should be made. If no value for T is stored in the SIM, 72 hours is used as the default value for T.
2) If the MS is not using one of the following at the start of timer T: EC-GSM-IoT, Category M1, or Category NB1. In this case, T may be in the range of 6 minutes to 8 hours in 6 minutes steps, or it may indicate that T should not be attempted periodically. If at the start of timer T, the MS is in the VPLMN with satellite NG-RAN access over a shared MCC, then based on a step of 6 multiplied by an integer M minutes, T is in the range between 6 minutes multiplied by an integer M hours and 8 minutes multiplied by an integer M hours. If no value for M is stored in the SIM, the default value for M is 1. If no value for T is stored in the SIM, 60 minutes is used as the default value for T.

If MinimumPeriodicSearchTimer is set for an MS, the MS should not use a T value that is less than MinimumPeriodicSearchTimer. If the value stored in the SIM or the default value of T (if no value is stored in the SIM) is less than the MinimumPeriodicSearchTimer, then T shall be set to the MinimumPeriodicSearchTimer.

In accordance with various examples of the present disclosure, data analytics (e.g., NWDAF or AI/ML of the RAN or core network) may be deployed, and the data analytics may be used to select a PLMN. In this case, the MinimumPeriodicSearchTimer may be determined and updated/set/provisioned based on the analysis of the PLMN search interval and configuration.

For example, a network node such as NWDAF may analyze statistical values/predicted values for HPLMN flyover information and PLMN search interval time experienced by the terminal. Alternatively, a node performing an analytics function in the access network (e.g., a node colocated with a base station/NG-RAN or OAM node) may analyze statistical values/predicted values for battery life of the terminal, HPLMN flyover information experienced by the terminal, and statistical values/predicted values for PLMN search interval time. The network node (e.g., OAM or AMF) may determine the MinimumPeriodicSearchTimer based on the aforementioned statistical and/or prediction values. The network node (e.g., OAM or AMF) may update, set, and/or provide the MinimumPeriodicSearchTimer based on the statistical values and/or predicted values described above.

The MS does not stop timer T when activating power saving mode (PSM) or mobile initiated connection only mode (MICO).

The MS does not stop timer T when the access layer is disabled due to discontinuous coverage.

The MS may be configured with Fast First Higher Priority PLMN search. Fast First Higher Priority PLMN search is enabled if the corresponding configuration parameter exists and is set to Enabled. Otherwise, Fast First Higher Priority PLMN search is disabled.

Attempts to access an HPLMN or EHPLMN, or a high-priority PLMN, may be performed as described below:
a) Periodic attempts shall be performed in automatic mode only when the MS is roaming, and shall not be performed while the MS is connected for emergency bearer services, registered for emergency services, has a PDU session for emergency services, or has a PDN connection for emergency bearer services;
b) The MS shall make the first attempt after a minimum of 2 minutes and a maximum of T minutes if the following cases occurs:
   - Only after power-on if Fast First Higher Priority PLMN search is disabled; or
   - After powering on or after selecting a VPLMN if Fast First Higher Priority PLMN search is enabled.
c) If the MS is in the VPLMN T hours after the last attempt, the MS performs the next attempt;
d) The MS shall perform periodic attempts only in idle mode or in 5GMM connection mode with RRC inactive indication;
d1) Periodic attempts may be postponed if the MS is in PSM or if the access layer is disabled due to discontinuous coverage.
d2) Periodic attempts may be deferred while the MS is in idle mode and receiving eMBMS transmission services.
d3) Periodic attempts may be postponed until the next eDRX opportunity while eDRX is being established for the MS.
d4) Periodic attempts may be postponed while the MS is in a relaxed monitoring state.
d5) Periodic attempts may be postponed while the MS is in MICO mode.
e) If the HPLMN (if the EHPLMN list is not present or empty) or EHPLMN (if the list is present) or a PLMN of higher priority maynot be found, the MS shall remain in the VPLMN.
f) MS may limit attempts to access high priority PLMN/access technology combinations to PLMN/access technology combinations in the same country as the VPLMN currently in service.

Exception: If the MS is in a VPLMN with satellite NG-RAN access or satellite E-UTRAN access with a shared MCC, the MS may attempt to access the higher priority PLMN/access technology combination regardless of the MCC value.

Exception: If the MS is in a VPLMN, the MS may attempt to access a higher priority PLMN using a shared MCC with satellite NG-RAN access technology or satellite E-UTRAN access technology.

f1) If the MS has a stored "Equivalent PLMN" list, the MS shall select a PLMN only if it has a higher priority in the same country as the currently in-service PLMN stored in the "Equivalent PLMN" list.

Exception: If the MS is in a VPLMN via satellite NG-RAN access or satellite E-UTRAN access via a shared MCC, the MS shall select a PLMN only if it has a higher priority than the one stored in the "Equivalent PLMN" list.

Exception: If the MS is in a VPLMN, the MS shall select a PLMN only if it has a higher priority than the same country as the PLMN currently in service or a country with a shared MCC with satellite NG-RAN access technology or satellite E-UTRAN access technology stored in the "Equivalent PLMN" list.

g) If the UE has a list of "PLMNs deregistered due to Steering of Roaming (SOR)", which is located in the same country as the VPLMN currently in service, only the priority level of an equivalent PLMN that is not in the "PLMNs deregistered due to SOR" list shall be considered when comparing the priority level of the selected PLMN.

h) If the PLMN of the highest priority PLMN/access technology combination available is the current VPLMN or one of the PLMNs in the "Equivalent PLMN" list, and the UE has a list of "PLMNs whose registration has been interrupted due to SOR", the MS shall remain in the current PLMN/access technology combination.
i) If the UE has a list of "PLMNs deregistered due to SOR", the MS shall consider the PLMNs in the "PLMNs deregistered due to SOR" list as the lowest priority.

NOTE 1: As an MS implementation option, after timer TD, TE, TF, TG or TH has expired and while the timer is running, the MS may perform an attempt if there is a PLMN/connection technology combination that the MS could not select (e.g., if the PLMN is on the list of PLMNs that are not eligible for voice service on E-UTRAN) that has a higher priority than the currently serving PLMN and belongs to the same country as the currently serving PLMN.

NOTE 2: As an MS implementation option, when transitioning into or out of an international region, a UE supporting satellite NG-RAN or satellite E-UTRAN may attempt to receive service from a higher priority PLMN. It is up to the UE implementation to determine when to switch into or out of the international region.

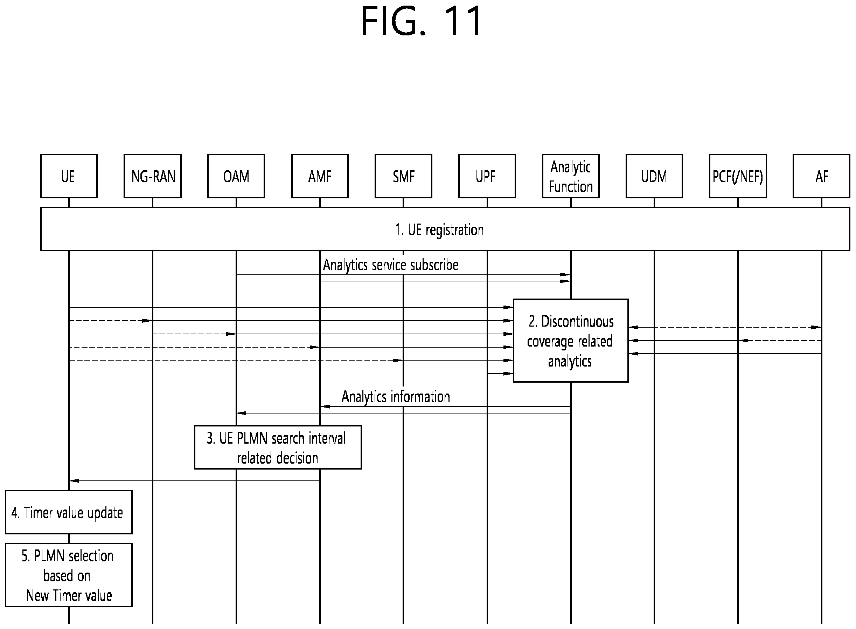

Specific examples of operation in accordance with various examples of the present disclosure will be described below, with reference to the example of FIG. 11.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 11** **illustrates a first example of a procedure according to one embodiment of the present disclosure.**
1. the terminal (e.g., UE) may be roaming and connected to the 5G system. For example, the HPLM to which the terminal is subscribed and the serving VPLMN from which the terminal wishes to utilize services may be PLMNs that perform satellite-based communications. In one example, the HPLM to which the terminal is subscribed and the serving VPLMN may be PLMNs that use satellite access. The NG-RAN, OAM, AMF, SMF, UPF, Analytics Function, UDM, PCF(/NEF), and AF shown in the example of FIG. 11 may be network nodes included in the VPLMN in which the terminal roamed. In step 1, the terminal may have performed the registration procedure for the VPLMN.

The OAM or AMF may subscribe to a service that requests analytics. 2. For example, the OAM or AMF may send a subscription request message to the Analytic function node to subscribe to an analytics service.

For example, the Analytic function node may reside in the access network (AN) or the core network (CN). For example, if the Analytic function node resides in the core network, the Analytic function node might be an NWDAF. The Analytic Functional Node may exist alone, or it may be colocated with other Analytic Functional Nodes. For example, if an OAM or AMF does not have a direct interface with the Analytic Functional Node, the OAM or AMF may subscribe to the services of the Analytic Functional Node through another node.

Step 2 may be performed for the purpose of obtaining statistical and prediction values of information related to discontinuous coverage. For example, if the OAM or AMF wishes to obtain statistical and prediction values of information related to discontinuous coverage, the OAM or AMF may send a subscription request message to the Analytic function node to subscribe to the analytics service.

For example, the OAM or AMF may determine that the UE's HPLMN has discontinuous coverage, as illustrated in the following examples. For example, when the terminal connects to the network, the base station may recognize that it is connected to satellite access. The base station may transmit information related to the satellite access to the AMF. The AMF may recognize that the HPLMN has discontinuous coverage. In addition, through interaction with network nodes (e.g., the AMF), the OAM may also be aware that the HPLMN has discontinuous coverage. Additionally, the network operator may additionally configure for the OAM or AMF, in which regions satellite access is available.

The Analytic function node may perform analytics related to discontinuous coverage. For example, the Analytic functional node may perform any of the functions and/or opeations described above. For example, the analytics functional node may obtain information related to the discontinuous coverage from other network nodes. For example, as illustrated in the example of FIG. 11, the analytics functional node may obtain information related to discontinuous coverage from a UE, NG-RAN, OAM, AMF, SMF, UPF, UDM, PCF(/NEF), and/or AF.

For example, information related to discontinuous coverage may include, for example, HPLMN flyover information by time/region, AS deactivation time/region/maintenance period of the terminal, information on whether the terminal supports/operates discontinuous coverage directly or indirectly via subscription information, and/or the terminal's satellite access and/or discontinuous coverage support/operation capability. Other network nodes providing information related to the discontinuous coverage of the terminal may obtain such information directly from the terminal or indirectly from base stations, OAM nodes, third network nodes, UDMs, AFs, etc.

The analytics function node may analyze statistical values/predictions for the terminal's battery life. In particular, the analytics function node may analyze statistical/predicted values for battery life based on whether certain services are used or not.

The analytics function node may analyze statistical values/predicted values for HPLMN flyover information and PLMN search interval time experienced by the terminal.

The analytics function node may send analytics information to the AMF or OAM.

3. the OAM or AMF may evaluate the terminal's PLMN search interval time value based on analytics information and determine whether to update that value. For example, the OAM or AMF may evaluate the terminal's PLMN search interval time value based on analytics information. Then, based on the analytics information, the OAM or AMF may determine whether to update the PLMN search interval time value.

If the decision is made to update, the OAM or AMF may update the PLMN search interval time value based on analytics information. In this case, the OAM or AMF may send the updated PLMN search interval time value to the UE.

At this time, HPLMN's discontinuous coverage operation/support, terminal capability, subscription characteristics, etc. may also be considered.

4. The OAM or AMF may send the updated PLMN search interval time value to the terminal. The terminal may apply the updated PLMN search interval time value to change its configuration. For example, the terminal may change settings related to PLMN search and/or selection to perform PLMN search based on the updated PLMN search interval time value. For example, the terminal may change the timer value used for PLMN search and/or selection based on the updated PLMN search interval time value.

5. The terminal may perform PLMN selection based on the newly changed timer value.

For example, PLMN selection may be performed as shown in the following example.

The terminal may search PLMNs based on a changed timer value. For example, the terminal may search for PLMNs that are authorized for use according to the subscription and operator policy. For example, based on the changed timer value, the terminal may receive system information broadcast by a cell of the HPLMN, a cell of the VPLMN, or the like, and determine a list of PLMNs available in the region. The terminal may compare the list of available PLMNs with a list of allowed PLMNs stored in the terminal, and select a preferred PLMN. For example, the terminal may use factors such as signal strength, network capabilities, and operator preferences to determine the preferred PLMN. For example, the terminal may select HPLMN, or the terminal may select VPLMN.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

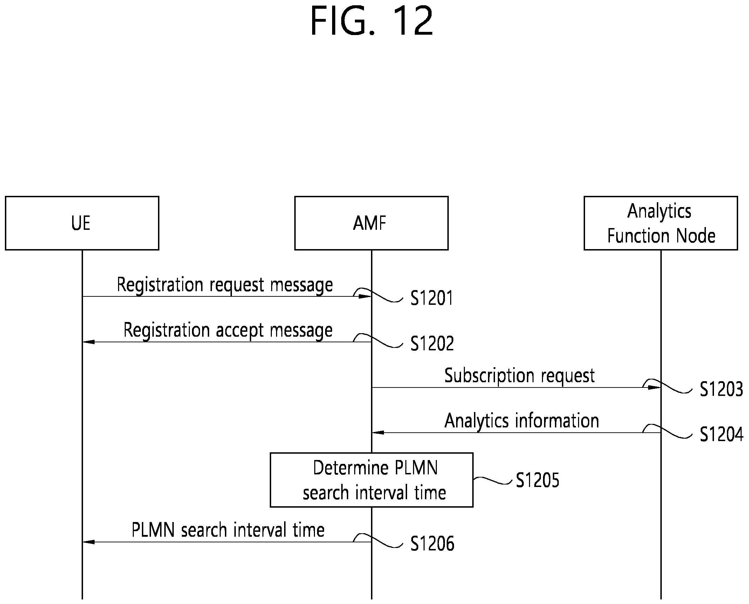

**FIG. 12** **illustrates a second example of a procedure according to one embodiment of the present disclosure.**

Note that the second example of the procedure shown in FIG. 12 is illustrative only, and the scope of the present disclosure is not limited by the example in FIG. 12.

For example, for the example of FIG. 12, the behavior described in the example of FIG. 11 may also be applied. For example, any behavior, content, etc. described in the various examples of the present disclosure may be applied, even if the behavior, content, etc. is not directly described in the example of FIG. 12.

In step S1201, the UE may send a registration request message to the AMF, which may include, for example, information related to the capabilities of the UE with respect to discontinuous coverage.

In step S1202, the AMF may transmit a registration accept message to the UE.

In step S1203, the AMF may transmit a subscription request message to the Analytics functional node. For example, the Analytics function node may be an NWDAF. The subscription request message may be an analytics service subscription request message or an event subscription request message.

An Analytics function node that receives a subscription request message may obtain information related to discontinuous coverage. For example, the Analytics function node may obtain information related to discontinuous coverage from other network nodes, base stations, UEs, etc.

The information related to the discontinuous coverage may include at least one of the following: information related to the flyover of the UE's HPLMN, information related to the deactivation of the UE's AS, subscription information of the UE, and/or capability information of the UE.

Based on information related to discontinuous coverage, the Analytics function node may determine statistical values and/or prediction values related to PLMN search interval times. For example, the Analytics functional node may determine, based on the information related to the discontinuous coverage, a statistical value and/or a predicted value related to the battery life of the UE, and a statistical value and/or a predicted value related to the flyover of the HPLMN.

At step S1204, the Analytics functional node may transmit analytics information to the AMF.

For example, analytics information may include statistical values and/or prediction values related to PLMN search interval times. The analytics information may further include statistical values and/or prediction values related to a battery life of the UE, and statistical values and/or prediction values related to a flyover of the HPLMN.

At step S1205, the AMF may determine a PLMN search interval time. For example, the AMF may update the PLMN search interval time. The AMF may determine the PLMN search interval time based on analytics information.

In step S1206, the AMF may transmit a PLMN search interval time to the UE. The UE may then perform a PLMN search based on the PLMN search interval time. For example, the UE may perform a PLMN selection procedure based on the PLMN search interval time.

According to one embodiment of the present disclosure, an analytics function node (e.g., NWDAF or base station level data analytics function) may collect and analyze information related to discontinuous coverage. According to one embodiment of the present disclosure, a network control node (e.g., a node that configures the PLMN search interval time value of a UE, an OAM, or an AMF) may obtain the information analyzed by the analytics function node. Then, the network control node configuring the PLMN search interval time value determines the PLMN search interval time of the terminal based on the analyzed information. The PLMN search interval time value network control node (e.g., a node that configures the PLMN search interval time value, an OAM, or an AMF) may transmit the changed (or determined) PLMN search interval time value to the terminal.

The present disclosure may have a variety of effects.

For example, according to various examples of the present disclosure, the performance of the system may be maximized by performing effective PLMN selection and reducing power consumption of the terminal. For example, the performance of the system may be maximized in a zero-touch configuration/operation environment with extended network automation. When determining the PLMN search interval for roamed terminals (e.g., terminals subscribed to HPLMN) in a discontinuous coverage environment, data statistics and predictions may be utilized. By utilizing data statistics and predictions when determining PLMN search intervals, you may perform more effective PLMN selection and reduce power consumption of the device. As a result, the performance of the system may be maximized.

The effects that may be obtained from the specific examples of the present disclosure are not limited to those listed above. For example, there may be a variety of technical effects that a person having ordinary skill in the related art may understand or infer from the present disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure of the present specification.

For reference, the operation of a network node (e.g., a network control node, analytics function node, AMF, SMF, UPF, PCF, OAM, UDM, PCF, NEF, PCF/NEF, AF, etc.) or base station (e.g., NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by an Access and Mobility Management Function (AMF) and comprising:
receiving a registration request message from a user equipment (UE);
transmitting a registration accept message to the UE;
transmitting an analytics service subscription request message to the analytics function node;
receiving analytics information from the analytics function node,
wherein the analytics information includes prediction values and/or statistical values based on information related to discontinuous coverage for the UE; and
determining a Public Land Mobile Network (PLMN) search interval time for the UE based on the analytics information.

2. The method of claim 1, further comprising:
transmitting the PLMN search interval time to the UE.

3. The method of claim 1 or claim 2,
wherein the PLMN search interval time is an updated PLMN search interval time having a different value than PLMN search interval time that the UE had.

4. The method of any one of claims 1 to 3,
The method of claim 1, wherein the analytics service subscription request message enables the analytics function node to obtain information related to the discontinuous coverage.

5. The method of any one of claims 1 to 4,
wherein the information related to the discontinuous coverage includes at least one of information related to a flyover of the Home PLMN (HPLMN) of the UE, information related to deactivation of the Access Stratum (AS) of the UE, subscription information of the UE, and/or capability information of the UE.

6. The method of any one of claims 1 to 5,
wherein the analytics information includes statistics values and/or prediction values associated with the PLMN search interval time.

7. The method of any one of claim 6,
wherein the analytics information further includes statistics values and/or prediction values for battery life of the UE, and statistical values and/or predicted values related to flyover of the HPLMN.

8. An Access and Mobility Management Function (AMF) for performing communication, the AMF comprising:
at least one transceiver;
at least one processor; and
at least one computer memory operably connectable to the at least one processor and storing instructions that, based on being executed by the at least one processor, perform operations of the method of any one of claims 1 to 7.

9. A method for performing communication, the method performed by a User Equipment (UE) and comprising:
transmitting a registration request message to an Access and Mobility Management Function (AMF);
receiving a registration accept message from the AMF; and
receiving an updated Public Land Mobile Network (PLMN) search interval time from the AMF.

10. The method of claim 9,
wherein the registration request message includes information related to capability information of the UE related to discontinuous coverage.

11. The method of claim 9 or 10, further comprising:
performing a PLMN selection based on the updated PLMN search interval time.

12. A user equipment (UE) configured to operate in a wireless communication system, the UE comprising:
at least one transceiver;
at least one processor; and
at least one computer memory operably connectable to the at least one processor and storing instructions that, based on being executed by the at least one processor, perform operations of the method of any one of claims 9 to 11.

13. An apparatus in mobile communication, the apparatus comprising:
at least one processor; and
at least one computer memory operably connectable to the at least one processor and storing instructions that, based on being executed by the at least one processor, perform operations of the method of any one of claims 9 to 11.

14. A non-transitory Computer Readable Medium (CRM) storing instructions that, based on being executed by at least one processor, perform the method of any claims 9 to 11.
